# FASCICULE DE BREVET EUROPEEN

(11) **EP 1 087 568 B1**
(45) Date de publication et mention de la délivrance du brevet: **13.06.2007**
(21) Numéro de dépôt: 00402623.3
(22) Date de dépôt: 21.09.2000
(51) Int. Cl.: H04L 12/24

(54) **Procédé et dispositif de gestion des circuits de transmission d'un réseau**
Verfahren und Vorrichtung zur Verwaltung von Ubertragungskreisen in einem Netzwerk
Method and apparatus for transmission circuit management in a network

(30) Priorité: 27.09.1999 FR 9911990
(43) Date de publication de la demande: 28.03.2001
(73) Titulaire: Alcatel Lucent, 75008 Paris (FR)
(72) Inventeur: Thome, Franck, 92160 Antony (FR); Heritier, Fabien, 75013 Paris (FR); Lapraye, Bertrand, 91190 Gif sur Yvette (FR)
(74) Mandataire: Lamoureux, Bernard

(56) Documents cités:
- US-A- 5 388 189
- HAJELA S: "HP OEMF: ALARM MANAGEMENT IN TELECOMMUNICATION NETWORKS" HEWLETT-PACKARD JOURNAL,US,HEWLETT-PACKARD CO. PALO ALTO, vol. 47, no. 5, 1 octobre 1996 (1996-10-01), pages 22-30, XP000631663
- GARANDEL R: "NETWORK EXPERIMENTATION WITH Q3 INTERFACE" IEEE NETWORK OPERATIONS AND MANAGEMENT SYMPOSIUM (NOMS),US,NEW YORK, IEEE, vol. SYMP. 5, 1996, pages 501-509, XP000634814 ISBN: 0-7803-2519-2

## Description

La présente invention a pour objet un procédé et un dispositif de gestion des circuits de transmission d'un réseau. Le réseau dont il est question est essentiellement un réseau de télécommunications de type régional, c'est-à-dire capable de gérer un grand nombre d'abonnés, par exemple de l'ordre d'un million d'abonnés.

Au niveau des pays, les opérateurs de téléphonie organisent les communications dans leur réseau général par des réseaux élémentaires. Ces réseaux élémentaires, ou réseaux, comportent typiquement un millier de noeud de routage et d'insertion extraction, dits Network Element, NE, dans la littérature anglo-saxonne. Les régions concernées par ces réseaux élémentaires sont soit des provinces étendues, soit des grandes villes, le nombre d'abonnés à relier n'étant qu'une indication imprécise. Les noeuds de routage de ces réseaux sont généralement reliés entre eux par des liens de connexion du type STM16, c'est-à-dire capable de transmettre des débits d'informations de 2,5 Gbits/s. Ces liens peuvent également être constitués de liens de type STM1 (un lien STM16 étant équivalent en débit à seize liens STM1) qui proposent selon leur configuration des débits de 155 Mbits, ou bien de 3 x 34 Mbits/s, ou de 3 x 45 Mbits/s, ou de 21 x 6 Mbits/s, ou encore de 63 x 2 Mbits/s. Ces différents débits servent à constituer des architectures le plus adaptées possibles aux besoins. En effet, les équipements installés dans chacun des noeuds et leurs configurations dépendent des besoins constatés localement dans le voisinage du noeud. De tels réseaux élémentaires sont des réseaux de type SDH. Certains des noeuds de ces réseaux présentent par ailleurs des particularités.

Certains noeuds sont par exemple des noeuds de connexion à des fibres optiques de liaisons inter-régionales, par exemple sous-marines, notamment pour le passage sous l'océan Atlantique. Dans ce cas les débits rencontrés sont de l'ordre de 40 Gbits/s pour chaque fibre optique. Une liaison en fibre contient plusieurs fibres optiques capables de tels débits.

D'autres noeuds ont par ailleurs des fonctions complémentaires à ces fonctions de routage et d'insertion extraction propres aux autres noeuds. Ces autres noeuds sont des noeuds passerelle, Gateway Network Element - GNE, et permettent de relier un organe de gestion de réseau à chacun des noeuds du réseau.

Cet organe de gestion de réseau dit par la suite système de gestion de réseau comporte des liaisons de type signalisation (dont les informations peuvent par ailleurs être acheminées par des voies normales du réseau) qui sont destinées à organiser les interconnexions et le travail des différents noeuds de routage et d'insertion extraction du réseau.

Un tel réseau élémentaire de type SDH ayant une structure maillée, il est possible de relier deux points quelconques de ce réseau par de multiples chemins. En cas de coupure d'un lien du réseau, il est prévu de dérouter le trafic transmis par ce lien sur d'autres liens aboutissant à des mêmes points de départ et des mêmes points d'arrivée. Ces modifications d'organisation de la transmission sont effectuées à la requête de clients. Les clients sont soit des opérateurs, personnes physiques, qui agissent sur des touches de commande du système de gestion de réseau (clavier, souris ou autres), soit des processus automatiques enclenchés à la demande par le système de gestion de réseau lorsqu'il reçoit d'un noeud de routage une demande de réorganisation qui concerne ce noeud. Par exemple en fonction des débits qui ont été indiqués ci-dessus, les équipements d'un noeud peuvent être modifiés pour passer d'une architecture, et d'un débit donné, à une autre architecture et à un autre débit : de 3 x 45 Mbits/s à 21 x 6 Mbits/s par exemple. Ces tâches de changement de configuration n'ont jamais un caractère d'urgence, elles peuvent être différées dans le temps de quelques secondes voire de quelques minutes. Ces tâches de changement de configuration sont de la responsabilité du système de gestion de réseau qui utilise, pour éviter une surcharge de travail, une méthode d'affectation de priorités aux différentes tâches à réaliser.

Par exemple, la gestion des entrées sorties devra être traité avec une priorité supérieure à la gestion de la configuration, ou de la réorganisation, du réseau. Un troisième type d'action est encore plus prioritaire : il s'agit des actions programmées à heures fixes pour, par exemple, vérifier l'état des connexions avec les noeuds du réseau.

Pour gérer ces différents niveaux de priorité, un système central du système de gestion de réseau répartit les différentes tâches à effectuer par ce système de gestion de réseau dans différentes piles : une pile de synchronisation (ou timers) la plus prioritaire, une pile de gestion des entrées et sorties, et une pile des travaux différés (dits aussi jobs). Le système de gestion de réseau ne traite les travaux accumulés dans une pile de rang de priorité inférieure que si tous les travaux accumulés dans les piles de rang de priorités supérieures ont été traités. De ce fait, chaque fois qu'une requête, une demande d'entrée sortie ou un ordre de synchronisation est reçu dans le système de gestion de réseau, il est rangé dans la pile correspondante et traité selon son ordre de priorité.

Certains événements suivent dans cette hiérarchie un traitement particulier. Il s'agit des alarmes. Les alarmes peuvent être de toute nature. Elles ne possèdent pas, à priori, de niveau de priorité. Néanmoins s'agissant d'événement affectant la pérennité du réseau, et le dysfonctionnement total de celui pouvant se produire, les alarmes doivent être traitées en toute priorité, de façon au moins essentiellement à leur donner un niveau de sévérité pour connaître l'importance et l'urgence de la réaction à une panne que ces alarmes représentent. De ce fait, le système central du système de gestion de réseau gère toutes les alarmes dès leur arrivée, en priorité par rapport aux autres événements.

Il apparaît que ce type de fonctionnement conduit dans certains cas à un blocage du système de gestion de réseau. En effet, lorsqu'une liaison à haut débit est détériorée, par exemple une liaison sous-marine par fibre optique évoquée ci-dessus, le nombre des alarmes représentant une impossibilité de transmettre affectée aux canaux de transmission qui ont emprunté cette fibre optique devient très important. Pour une architecture donnée d'un système de gestion de réseau, on a retenu un débit de traitement des alarmes de l'ordre de vingt alarmes par seconde. Comme en pratique le système de gestion de réseau ne traite pas que des alarmes, mais traite également d'autres actions, le débit utile de traitement des alarmes est de l'ordre de cinq alarmes par seconde. Il apparaît alors que la rupture d'une liaison à très grand débit provoque l'émission d'un ou de plusieurs milliers d'alarmes.

Avec une telle quantité d'alarmes, le système de gestion de réseau se trouve alors figé, pendant une vingtaine de minutes, pour le traitement de toutes ces alarmes. Les opérations demandées au système de gestion de réseau ne peuvent pas être traitées avant la fin de cette durée d'attente importante. Il peut en résulter un blocage du système de gestion de réseau et la suspension du service de supervision du réseau.

La solution consistant à surdimensionner les équipements du système de gestion de réseau n'est pas une solution économiquement viable parce que les phénomènes d'alarmes massives ne sont pas fréquents, et parce qu'elle impliquerait de mettre à disposition des moyens de traitement pléthoriques et dont la fiabilité en elle-même pourrait devenir un problème, et risquerait de ne même pas conduire à une solution raisonnable à ce problème de blocage.

Le document US-A-5 388 189 divulgue une méthode de traitement des alarmes dans un réseau, basée sur un système expert qui filtre les alarmes en éliminant les alarmes redondantes et en éliminant les alarmes de faible importance.

L'invention préconise une solution plus simple pour remédier à ce problème. On a constaté en effet que lorsqu'une panne surgissait, la réaction à cette panne ne pouvait en aucun cas être rapide. On ne peut en effet réparer à distance une fibre optique. Dans ces conditions, on a choisi dans l'invention de décomposer le traitement des alarmes initialement de nature monolithique (plusieurs dizaines d'alarmes peuvent être contenues dans un seul message à l'entrée dans le système) et hautement prioritaire en une succession de traitements plus courts (par exemple cinq alarmes à la fois) qui demandent moins de temps, et d'attribuer à ces traitements une priorité plus faible. De ce fait, l'appréciation de la sévérité de l'alarme, en elle-même, est considérée comme une tâche non-urgente, toute proportion gardée. En conséquence selon l'invention, lorsqu'une ou plusieurs alarmes surviennent, un système central du système de gestion de réseau exécute ou fait exécuter une tâche très rapide (qui elle peut être classée dans les tâches les plus prioritaires) et qui consiste à décomposer des alarmes du flux d'alarmes entrant en des tâches de priorité inférieure, chargées par exemple chacune de traiter cinq (ou autres) alarmes. Ce traitement consiste à réémettre ces alarmes dans un format plus complet. En agissant ainsi on évite que les opérateurs, personnes physiques, puissent perdre la main sur le système de gestion de réseau.

L'invention a donc pour objet un procédé de gestion des circuits de transmission d'un réseau dans lequel
- un système de gestion de réseau reçoit des requêtes en configuration et ou en connexion et, en provenance de noeuds de communication du réseau, des alarmes prioritaires relatives à l'état du réseau,
- le système de gestion de réseau organise les priorités des requêtes reçues, et
- le système de gestion de réseau traite les requêtes pour émettre des ordres d'actions qui y correspondent,
caractérisé en ce que
- le système de gestion de réseau attribue aux alarmes, dès leur réception, un rang de priorité de traitement inférieur, et les range dans un moyen de mémorisation, puis
- le système de gestion de réseau traite ces alarmes chacune à leur tour lorsqu'il traite les requêtes rangées dans ledit moyen de mémorisation.

L'invention a également pour objet un dispositif de gestion des circuits de transmission d'un réseau comportant :
- un système de gestion de réseau pour recevoir des requêtes en configuration et ou en connexion et, en provenance de noeuds de communication du réseau, des alarmes prioritaires relatives à l'état du réseau, pour organiser les priorités des requêtes reçues, et pour traiter les requêtes pour émettre des ordres d'actions qui y correspondent,
caractérisé en ce qu'il comporte
- des moyens pour attribuer aux alarmes, dès leur réception, un rang de priorité de traitement inférieur, les ranger dans un moyen de mémorisation, puis les traiter chacune à leur tour lorsque sont traitées les requêtes rangées dans ce moyen de mémorisation.

Selon une mise en oeuvre particulière de l'invention, le moyen de mémorisation est une file d'attente correspondant à ce rang de priorité inférieure, dans laquelle les alarmes sont rangées chronologiquement.

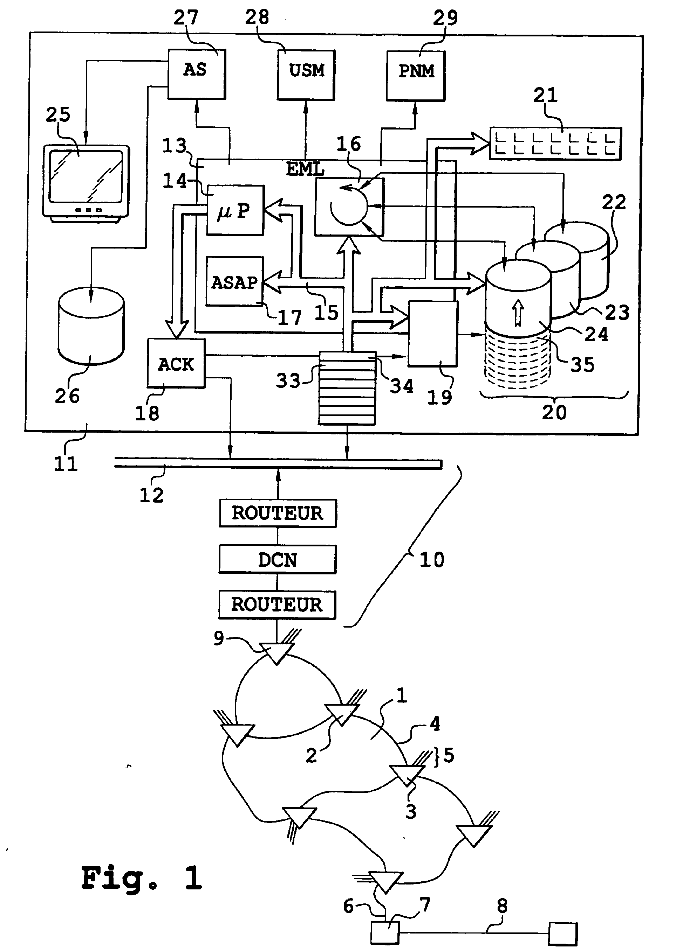

L'invention sera mieux comprise à la lecture de la description qui suit et à l'examen de la figure 1 qui l'accompagne. Celles-ci ne sont présentées qu'à titre indicatif et nullement limitatif de l'invention. La figure 1 montre une représentation schématique des circuits de transmission d'un réseau dans lequel le procédé de l'invention est mis en oeuvre.

La figure 1 montre un réseau 1 de type SDH. Le réseau 1 comporte des noeuds de communication tels que 2 et 3 qui sont reliés entre eux par des liens de communication 4, physiques, qui en pratique peuvent être des liens de type STM16 avec un débit important. Chaque noeud est en outre pourvu de moyens schématiquement représenté 5 d'insertion extraction permettant à des communications provenant d'utilisateurs situés au voisinage d'un noeud d'être acheminées vers d'autres utilisateurs situés au voisinage d'un autre noeud, ou du même noeud. Le réseau 1 possède par ailleurs un lien 6 avec un noeud de transmission 7 à très haut débit sur une ligne de transmission 8 qui comporte dans un exemple un faisceau de fibres optiques. Les équipements du noeud 7 sont notamment capables de transmettre les informations à traiter selon un mode dit WDM (Wavelength Division Multiplexed - répartition par multiplexage en longueur d'onde).

Le réseau 1 comporte essentiellement un noeud passerelle 9 relié par une voie de gestion 10 à un système 11 de gestion de réseau. Le système 11 de gestion de réseau peut être réalisé à partir d'une architecture répartie, avec de multiples processeurs et circuits périphériques connectés entre eux par une liaison 12 d'un réseau local. La liaison 10 est une liaison de signalisation et de gestion, la passerelle 9 étant en charge de transmettre aux noeuds 2 et 3, par des liens normaux tels que 4, ou par des liens spécialisés de signalisation, les ordres de configuration. La voie de gestion 10 comporte notamment des routeurs susceptibles d'encapsuler les ordres à transmettre aux équipements de noeuds 2 et 3 pour que ces ordres leur parviennent.

Schématiquement représentée, le système de gestion de réseau 11 comporte un système central, un processus central 13, dit EML, Element Management Layer - processus de gestion des éléments, qui comporte dans son principe un processeur 14 jouant un rôle d'unité arithmétique et logique du processus central 13. Le processeur 14 est relié par un bus 15 à des mémoires programmes telles que 16 et 17 et à certains circuits périphériques externes 18 ou internes 19. Il est encore relié à des mémoires de stockage 20. Les mémoires programmes 16 et 17 sont représentées d'une manière différenciée ici pour faire comprendre le procédé. Néanmoins elles peuvent être confondues et former le système d'exploitation du processus central 13 et en pratique être chargées dans la mémoire de travail du processeur 14. La mémoire programme 16 correspond à une gestion des événements. La mémoire programme 17 mémorise notamment une table de correspondance entre des causes probables et des sévérités d'alarme. La représentation montrée ici est schématique, dans la pratique seules les actions effectuées par le processus central seront détaillées, les processeurs, mémoires programmes, et mémoires de données utilisés pour les mener à terme pouvant avoir une architecture très variée.

Le processus 13 effectue sous le contrôle du programme contenu dans la mémoire 16 une organisation de priorité des requêtes reçues, en provenance de l'opérateur des systèmes de gestion de du réseau 1. Les requêtes peuvent néanmoins être reçues par d'autres périphériques, par exemple un clavier de commande 21, ou plus généralement un poste de travail 21 manipulé par un opérateur. L'organisation des requêtes consiste à les empiler dans la mémoire 20 selon des ordres de priorité différents, et qui sont fonction d'une part de l'urgence d'accomplissement des tâches qu'elles représentent et d'autre part de la chronologie de leur arrivée. Ainsi par exemple, dans une pile 22 de la mémoire 20 sont stockées toutes les requêtes relatives à des actions de synchronisation qui sont les plus urgentes. Dans une pile 23 sont stockées les différentes demandes d'établissement de circuits d'entrée et de sortie dans chacun des noeuds 2 et 3. Les réactions pour l'exécution des tâches de la pile 22 doivent être très rapides. Celles pour la gestion des entrées sorties doit être rapide. Certaines autres tâches, stockées dans la pile 24, concernent des requêtes émanant de clients relatives à des déroutages, à des modifications de configuration, à des créations de connexion entre deux noeuds, ou à des configurations de niveaux. Elles sont moins urgentes.

Après avoir rangé ces requêtes dans les différentes piles 22 à 24, le processus 13 sous le contrôle du programme de la mémoire 16 fait traiter les différentes tâches accumulées. En pratique un gestionnaire d'événements gère tous les événements survenant dans le système. Ces événements peuvent être de trois types : tâches programmées (timers), événements d'entrée sortie (I/O), tâches différées (jobs) qui sont traités dans cet ordre. Ce traitement comporte notamment l'émission par l'intermédiaire de la liaison 10 d'ordres destinés aux noeuds 2 et 3 et qui sont conformes, pour la configuration de ces noeuds, au contenu des requêtes.

En provenance du réseau et des noeuds de communication 2 et 3, le système de gestion de réseau 11 reçoit également des signaux d'alarme, ou alarmes, signalant un défaut de fonctionnement d'un équipement du réseau, un noeud de routage lui-même, ou une liaison entre deux noeuds. Ces alarmes sont, dans l'état de la technique, traitées avec la priorité la plus grande par le processus 13 qui met en oeuvre, entre autres, un programme de traitement des alarmes. Une structuration de données dite ASAP est utilisée à cet effet pour l'affectation de la sévérité par le processus 13, elle est stockée dans la mémoire 17 d'affectation de sévérité (Alarm Severity Assignment Profile - critère d'assignation de niveau de sévérité à une alarme). Selon cette structuration, le processus 13 donne un niveau de sévérité à chaque alarme, en fonction d'une hiérarchie.

Cette hiérarchie peut être liée à l'objet concerné, le noeud de routage 2 ou le lien 4 où s'est produit l'alarme. Cette hiérarchie peut également être fonction du contexte, une alarme étant d'autant plus grave que l'équipement concerné est peu ou beaucoup utilisé. En temps normal, le processus 13 reçoit l'alarme, lui donne un niveau de sévérité et fait une synthèse des alarmes relatives à un noeud. L'alarme la plus grave relative à ce noeud conditionne le statut du noeud. Le processus 13 émet ensuite sous le contrôle du programme ASAP, dans un autre protocole, des informations d'affichage sur un écran 25 et de stockage dans une mémoire 26 des alarmes traitées. Ce traitement passe notamment par une application 27 dite AS, Alarm Severity - sévérité des alarmes.

En ce qui concerne les équipements, par exemple un noeud de routage, une application 28 dite USM, User Service Management - gestion des services utilisateurs, affiche la synthèse relative à chaque équipement. Une autre application 29 dit PNM, Physical Network Management - gestion de réseau physique, permet de montrer la topologie du réseau.

Une application est ici une suite de traitements effectués sur des données avec un système informatique qui comporte des moyens matériels et des moyens logiciels. Les moyens logiciels étant concrétisés par la mémorisation de programmes (de logiciels) dans des mémoires physiques, l'ensemble des moyens matériels et logiciels sont réalisés sous forme de circuits

Sur les différents dispositifs d'affichage des applications 27, 28 et 29, les alarmes peuvent être classées de façon à attirer plus ou moins l'attention d'un opérateur en leur affectant des niveaux de gravité dit warning (attention), minor (mineur), major (majeur), ou critical (critique), et en combinant cet affichage avec une couleur respectivement bleu, jaune, orange ou rouge de l'information affichée sous la forme d'une icône. C'est cet ensemble d'opérations effectuées par le processus 13 sous le contrôle du programme 17 qui peut conduire au blocage et à l'indisponibilité momentanée du processeur 14 pour réagir aux sollicitations du programme de la mémoire 16 et/ou du poste de travail 21, tant que toutes les alarmes reçues n'ont pas été traitées.

Selon l'invention ce problème est résolu en transformant les signaux d'alarme reçus en des tâches de degré de priorité inférieur, typiquement en des tâches stockables dans la pile 24 de la mémoire 20. Dans ce but, dans un exemple, les alarmes peuvent être reçues dans une mémoire tampon 33. Les alarmes reçues dans la mémoire 33 sont ensuite gérées par un processus propre à l'invention. Ce processus peut être mémorisé dans la mémoire programme 19. En pratique le programme de la mémoire 19 peut être confondu dans ce cas avec celui des mémoires 16 ou 17 (et être ainsi contenu dans le processus 13). Le programme de la mémoire 19 peut par ailleurs être remplacé par un automate, interne ou externe au processus central 13, et comportant un mode propre de fonctionnement. Dans les deux cas, la fonction exécutée consiste à reconnaître dans les signaux reçus qu'il s'agit d'alarmes. Le fait qu'il s'agisse d'alarme est par ailleurs une information disponible dans les signaux d'alarme soit par leur absence de niveau de priorité soit par la présence dans le signal lui-même d'une entête signifiant qu'il s'agit d'un signal d'alarme.

Le processus mis alors en oeuvre par le processus 13 ou par un automate autonome et décentralisé équivalent a alors, selon l'invention, pour objet de transférer une alarme reçue dans la mémoire tampon 33 en queue de la pile 24 des tâches, ici des tâches les moins urgentes. En n'effectuant alors pas le traitement d'attribution de sévérité, de synthèse, et d'affichage sur les différents dispositifs 27 à 29, le processus 13 reste disponible pour traiter les événements stockés dans les piles 22, 23 ou 24 et précédant ces signaux d'alarme.

Compte tenu de la durée évoquée précédemment et des débits de traitement de l'unité centrale 14, on préfère mémoriser comme tâche 35 non pas une seule alarme 34 mais cinq alarmes successives, quand c'est possible. Ceci est possible lorsque plusieurs alarmes se sont empilées les unes derrière les autres. Néanmoins, il est également possible de prévoir une mémoire tampon intermédiaire dans laquelle des alarmes sont provisoirement stockées et de laquelle elles ne sont transférées dans la pile 24 à l'emplacement 35 que quand cinq alarmes sont présentes. De préférence, un tel fonctionnement sera lié à une temporisation maximale : au-delà d'une certaine durée, un stockage dans l'emplacement 35 sera de toute façon provoquée, que cinq alarmes soient rassemblées ou non.

De préférence selon l'invention toutes les alarmes seront traitées de cette façon par mise en pile dans la pile 24, qu'il y en ait une seule ou qu'il y en ait un flot.

L'invention permet donc de résoudre des problèmes de congestion de traitement provoqués par l'intervention simultanée d'un nombre très important d'alarmes. Les alarmes sont ainsi traitées en temps différé, ou au moins comme des tâches non particulièrement urgentes. En pratique, la mesure de la sévérité d'une alarme n'est pas traitée en elle-même comme un événement urgent même si cette sévérité une fois attribuée fait apparaître un événement d'une grande gravité liée à l'alarme.

## Revendications

1. - Procédé de gestion des circuits de transmission d'un réseau (1) dans lequel :
- un système de gestion (11) de réseau reçoit des requêtes en configuration et ou en connexion et, en provenance de noeuds (2, 3) de communication du réseau, des alarmes prioritaires relatives à l'état du réseau,
- le système de gestion de réseau organise (16) les priorités (20, 22-24) des requêtes reçues, et
- le système de gestion de réseau traite (16) les requêtes pour émettre des ordres d'actions qui y correspondent,
**caractérisé en ce que**
- le système de gestion de réseau attribue (19) aux alarmes, dès leur réception, un rang de priorité de traitement inférieur, et les range dans un moyen de mémorisation,
- le système de gestion de réseau traite (17) les alarmes, stockées dans ledit moyen de mémorisation, chacune à leur tour.

2. - Procédé selon la revendication 1, **caractérisé en ce que** ledit moyen de mémorisation est une file (24) d'attente correspondant audit rang de priorité inférieure, dans laquelle lesdites alarmes sont rangées chronologiquement.

3. - Procédé selon l'une des revendications 1 à 2, **caractérisé en ce que** pour un flot d'alarmes reçues, le système de gestion de réseau les groupes par paquets de cinq avant de les ranger dans ledit moyen de mémorisation.

4. - Procédé selon l'une des revendications 1 à 3, **caractérisé en ce que**
- pour le traitement des alarmes, le système de gestion de réseau attribue un niveau de sévérité à l'alarme.

5. - Procédé selon l'une des revendications 1 à 4, **caractérisé en ce que**
- le système de gestion de réseau fait attribuer aux alarmes un rang inférieur et/ou les fait ranger dans ledit moyen de mémorisation par un automate (19) décentralisé.

6. - Procédé selon l'une des revendications 1 à 5, **caractérisé en ce que**
- le système de gestion de réseau reçoit les alarmes dans une mémoire tampon (33).

7. - Dispositif (11) de gestion des circuits (2, 3) de transmission d'un réseau (1) comportant :
- un système de gestion (11) de réseau pour recevoir des requêtes en configuration et ou en connexion (5) et, en provenance de noeuds (2, 3) de communication du réseau, des alarmes (31) prioritaires relatives à l'état du réseau, pour organiser (16) les priorités (20, 22-24) des requêtes reçues, et pour traiter les requêtes pour émettre des ordres d'actions qui y correspondent,
**caractérisé en ce qu**'il comporte des moyens (19) pour attribuer aux alarmes, dès leur réception, un rang de priorité de traitement inférieur, les ranger dans un moyen de mémorisation, puis traiter (17) les alarmes stockées dans ledit moyen de mémorisation, chacune à leur tour.

8. - Dispositif selon la revendication précédente, **caractérisé en ce que** ledit moyen de mémorisation est une file (24) d'attente correspondant audit rang de priorité inférieure, dans laquelle lesdites alarmes sont rangées chronologiquement.

9. - Dispositif selon une des revendications 7 ou 8, **caractérisé en ce que**
- le système de gestion de réseau comporte un automate (19) décentralisé pour attribuer aux alarmes un rang inférieur.

10. - Dispositif selon l'une des revendications 7 à 9, **caractérisé en ce que** le système de gestion de réseau comporte un automate (19) décentralisé pour ranger lesdites alarmes dans ledit moyen de mémorisation.

11. - Dispositif selon l'une des revendications 7 à 9, **caractérisé en ce que** le système de gestion de réseau comporte une mémoire tampon (33) utilisable pour ranger les alarmes dans ledit moyen de mémorisation.

## Claims

1. A method of managing transmission circuits of a network (1), in which method:
· a network management system (11) receives configuration and/or connection requests and, from communications nodes (2, 3) of the network, priority alarms relating to the status of the network,
·the network management system organizes (16) the priorities (20, 22-24) of the requests received, and
· the network management system processes (16) the requests to send instructions for actions that correspond to them,
the method being **characterized in that**:
· the network management system assigns (19) a lower processing priority to the alarms as soon as they are received and stores them in memory means, and
· the network management system processes (17) the alarms stored in said memory means in turn.

2. A method according to claim 1, **characterized in that** said memory means comprise a queue (24) corresponding to said lower priority and in which said alarms are stored in chronological order.

3. A method according to either claim 1 or claim 2, **characterized in that** the network management system groups a stream of received alarms into packets of five before storing them in said memory means.

4. A method according to any one of claims 1 to 3, **characterized in that**, for processing alarms, the network management system assigns a severity level to each alarm.

5. A method according to any one of claims 1 to 4, **characterized in that** the network management system assigns the alarms a lower rank and/or causes them to be stored in said memory means by a decentralized automaton (19).

6. A method according to any one of claims 1 to 5, **characterized in that** the network management system receives the alarms in a buffer memory (33).

7. A system (11) for managing transmission circuits (2, 3) of a network (1), the system including:
· a network management system (11) for receiving configuration and/or connection requests (5) and, from communications nodes (2, 3) of the network, alarms (31) relating to the status of the network, for organizing (16) the priorities (20, 22-24) of the received requests, and for processing the requests to send instructions for actions that correspond to them,
the system being **characterized in that** it includes means (19) for assigning the alarms a lower processing priority as soon as they are received, storing them in memory means and then processing (17) the alarms stored in said memory means in turn.

8. A system according to the preceding claim, **characterized in that** said memory means comprise a queue (24) corresponding to said lower priority and which said alarms are stored in chronological order.

9. A system according either to claim 7 or to claim 8, **characterized in that** the network management system includes a decentralized automaton (19) for assigning a lower rank to the alarms.

10. A system according to any one of claims 7 to 9, **characterized in that** the network management system includes a decentralized automaton (19) for storing said alarms in said memory means.

11. A system according to any one of claims 7 to 9, **characterized in that** the network management system includes a buffer memory (33) which can be used to store the alarms in said memory means.

## Patentansprüche

1. Verfahren zur Verwaltung von Übertragungskreisen in einem Netzwerk (1), in dem
- ein Netzwerkverwaltungssystem (11) Anforderungen in Sachen Konfiguration und / oder Anschluss empfängt und von den Kommunikationsknoten (2, 3) des Netzwerks herkommend vorrangige Alarme bezüglich des Status des Netzwerks,
- das Netzwerkverwaltungssystem die Prioritäten (20, 22-24) der empfangenen Anforderungen organisiert (16), und
- das Netzwerkverwaltungssystem die Anforderungen bearbeitet (16), um dementsprechende Maßnahmenbefehle zu senden,
**dadurch gekennzeichnet, dass**
- das Netzwerkverwaltungssystem den Alarmen bereits bei deren Empfang einen niedrigeren Bearbeitungsprioritätsrang zuweist (19) und sie in einem Speichermittel abspeichert,
- das Netzwerkverwaltungssystem die Alarme, die in diesem Mittel zur Speicherung hinterlegt sind, jeweils der Reihe nach bearbeitet (17).

2. Verfahren gemäß Anspruch 1, **dadurch gekennzeichnet, dass** dieses Mittel zur Speicherung eine Warteschlange (24) ist, die diesem niedrigeren Prioritätsrang entspricht, und in der diese Alarme chronologisch angeordnet werden.

3. Verfahren gemäß einem der Ansprüche 1 oder 2, **dadurch gekennzeichnet, dass** das Netzwerkverwaltungssystem bei einem empfangenen Alarmfluss die Alarme in Fünferpaketen gruppiert, bevor sie in dieses Mittel zur Speicherung eingeordnet werden.

4. Verfahren gemäß einem der Ansprüche 1 bis 3, **dadurch gekennzeichnet, dass**
- das Netzwerkverwaltungssystem für die Bearbeitung der Alarme dem Alarm einen Schweregrad zuweist.

5. Verfahren gemäß einem der Ansprüche 1 bis 4, **dadurch gekennzeichnet, dass**
- das Netzwerkverwaltungssystem den Alarmen einen geringeren Rang zuweisen lässt und/oder sie von einem dezentralen Automaten (19) in diesem Mittel zur Speicherung einordnen lässt.

6. Verfahren gemäß einem der Ansprüche 1 bis 5, **dadurch gekennzeichnet, dass**
- das Netzwerkverwaltungssystem die Alarme in einem Pufferspeicher (33) empfängt.

7. Vorrichtung (11) zur Verwaltung von Übertragungskreisen (2, 3) in einem Netzwerk (1), enthaltend
- ein Netzwerkverwaltungssystem (11) zum Empfangen von Anforderungen in Sachen Konfiguration und / oder Anschluss (5) und von den Kommunikationsknoten (2, 3) des Netzwerks herkommend vorrangiger Alarme (31) bezüglich des Status des Netzwerks, zum Organisieren (16) der Prioritäten (20, 22-24) der empfangenen Anforderungen (16), und zum Bearbeiten der Anforderungen, um dementsprechende Maßnahmenbefehle zu senden,
**dadurch gekennzeichnet, dass** es Mittel (19) enthält, um den Alarmen bereits bei deren Empfang einen niedrigeren Bearbeitungsprioritätsrang zuzuweisen, sie in einem Speichermittel abzuspeichern, dann die in diesem Mittel zur Speicherung hinterlegten Alarme jeweils der Reihe nach zu bearbeiten (17).

8. Vorrichtung gemäß vorstehendem Anspruch, **dadurch gekennzeichnet, dass** dieses Mittel zur Speicherung eine Warteschlange (24) ist, die diesem niedrigeren Prioritätsrang entspricht, und in der diese Alarme chronologisch angeordnet werden.

9. Vorrichtung gemäß einem der Ansprüche 7 oder 8, **dadurch gekennzeichnet, dass**
- das Netzwerkverwaltungssystem einen dezentralen Automaten (19) enthält, um den Alarmen einen niedrigeren Rang zuzuweisen.

10. Vorrichtung gemäß einem der Ansprüche 7 bis 9, **dadurch gekennzeichnet, dass** das Netzwerkverwaltungssystem einen dezentralen Automaten (19) enthält, um diese Alarme in dieses Mittel zur Speicherung einzuordnen.

11. Vorrichtung gemäß einem der Ansprüche 7 bis 9, **dadurch gekennzeichnet, dass** das Netzwerkverwaltungssystem einen Pufferspeicher (33) enthält, der dazu verwendet werden kann, die Alarme in diesem Mittel zur Speicherung abzuspeichern.
